# EUROPEAN PATENT SPECIFICATION

(11) **EP 2 185 617 B1**
(45) Date of publication and mention of the grant of the patent: **16.03.2016**
(21) Application number: 08798710.3
(22) Date of filing: 26.08.2008
(51) Int. Cl.: C08G 18/22

(54) **CATALYSIS OF VISCOELASTIC FOAMS WITH BISMUTH SALTS**
KATALYSE VISKOELASTISCHER SCHAUMSTOFFE MIT BISMUTSALZEN
CATALYSE DE MOUSSES VISCO-ÉLASTIQUES PAR DES SELS DE BISMUTH.

(30) Priority: 27.08.2007 US 966284 P
(43) Date of publication of application: 19.05.2010
(73) Proprietor: Dow Global Technologies LLC, Midland, MI 48674 (US)
(72) Inventor: COOKSON, Paul, CH-8833 Samstagern (CH); CASATI, Francois, SZ-8808 Pfaffikon (CH); NOAKES, Christopher, CH-8805 Richterswil (CH)
(74) Representative: Beck Greener
(86) International application number: PCT/US2008/074338
(87) International publication number: WO 2009/029626

(56) References cited:
- EP-A- 0 603 597
- EP-A- 1 443 065
- WO-A-2007/065837
- GB-A- 1 056 542
- US-A- 3 714 077
- US-A- 4 105 595
- US-B1- 6 653 363

## Description

### Background

### Field of the Invention

Embodiments of the present invention generally relate to polyurethane foams; more specifically, to viscoelastic polyurethane foams.

### Description of the Related Art

Polyurethane foams are used in a wide variety of applications, ranging from cushioning (such as mattresses, pillows and seat cushions) to packaging to thermal insulation. One class of polyurethane foam is known as viscoelastic (VE) or "memory" foam. Viscoelastic foams exhibit a time-delayed and rate-dependent response to an applied stress. They have low resiliency and recover slowly when compressed. These properties are often associated with the glass transition temperature (T_{g}) of the polyurethane. Viscoelasticity is often manifested when the polymer has a T_{g} at or near the use temperature, which is room temperature for many applications.

Like most polyurethane foams, VE polyurethane foams are prepared by the reaction of a polyol component with an isocyanate, in the presence of a blowing agent, catalysts and other additives. Catalysts used include organometallic salt catalysts which promote the polyol-isocyanate (gelling) reaction. Usually, the organometallic salt catalyst is based on tin. However, in some instances there is a preference for avoiding a tin catalyst for environmental reasons. Therefore, there exists a need for a method of producing viscoelastic foams using less tin based catalysts while at the same time maintaining, or even exceeding, foam properties such as compression set.

### Summary

The embodiments of the present invention provide for viscoelastic polyurethane foams made in the presence of a bismuth comprising catalyst. In one embodiment, a composition is provided which includes a viscoelastic polyurethane foam which is the reaction product of a reaction mixture including at least one polyol and at least one isocyanate, wherein the at least one polyol and the at least one isocyanate are reacted in the presence of at least one bismuth comprising catalyst, and wherein the viscoelastic polyurethane foam has a density of less than 100 kg/m³ and a resilience of less than 25%.

In an alternative embodiment, an article is provided which includes a viscoelastic polyurethane foam that is the reaction product of a reaction mixture including at least one polyol and at least one isocyanate, wherein the at least one polyol and the at least one isocyanate are reacted in the presence of at least one bismuth comprising catalyst, and wherein the viscoelastic polyurethane foam has a density of less than 100 kg/m³ and a resilience of less than 25%.

In an alternative embodiment, a method for preparing a viscoelastic polyurethane foam is provided, which includes combining a reaction mixture including at least one polyol, at least one isocyanate, and at least one bismuth comprising catalyst to form a foam having a density of less than 100 kg/m³ and a resilience of less than 25%.

In an alternative embodiment, a viscoelastic foam includes a bismuth content of between 1 parts per million and 750 parts per million, and the viscoelastic foam has a density of less than 100 kg/m³ and a resilience of less than 25%.

In an alternative embodiment, there is provided a composition, method of producing the same, and articles made therefrom, in accordance with any of the preceding embodiments, except the viscoelastic polyurethane foam has a resilience of less than 20%.

In an alternative embodiment, there is provided a composition, method of producing the same, and articles made therefrom, in accordance with any of the preceding embodiments, except the viscoelastic polyurethane foam has a resilience of less than 15%.

In an alternative embodiment, there is provided a composition, method of producing the same, and articles made therefrom, in accordance with any of the preceding embodiments, except the viscoelastic polyurethane foam has a resilience of less than 10%.

In an alternative embodiment, there is provided a composition, method of producing the same, and articles made therefrom, in accordance with any of the preceding embodiments, except the viscoelastic polyurethane foam has an aromatic amine content of less than 10 parts per million

In an alternative embodiment, there is provided a composition, method of producing the same, and articles made therefrom, in accordance with any of the preceding embodiments, except the viscoelastic polyurethane foam has an aromatic amine content of less than 5 parts per million

In an alternative embodiment, there is provided a composition, method of producing the same, and articles made therefrom, in accordance with any of the preceding embodiments, except the viscoelastic polyurethane foam has an aromatic amine content of less than 3 parts per million

In an alternative embodiment, there is provided a composition, method of producing the same, and articles made therefrom, in accordance with any of the preceding embodiments, except the at least one polyol and the at least one isocyanate are reacted at an isocyanate index of between 75 and 100, and wherein the viscoelastic polyurethane foam has an aromatic amine content of less than 5 parts per million.

In an alternative embodiment, there is provided a composition, method of producing the same, and articles made therefrom, in accordance with any of the preceding embodiments, except the at least one polyol and the at least one isocyanate are reacted at an isocyanate index of between 75 and 100, and wherein the viscoelastic polyurethane foam has an aromatic amine content of less than 3 parts per million.

In an alternative embodiment, there is provided a composition, method of producing the same, and articles made therefrom, in accordance with any of the preceding embodiments, except the at least one polyol and the at least one isocyanate are reacted at an isocyanate index of between 75 and 100, and wherein the viscoelastic polyurethane foam has an aromatic amine content of less than 2 parts per million.

In an alternative embodiment, there is provided a composition, method of producing the same, and articles made therefrom, in accordance with any of the preceding embodiments, except the at least one polyol and the at least one isocyanate are reacted at an isocyanate index of between 80 and 95, and wherein the viscoelastic polyurethane foam has an aromatic amine content of less than 5 parts per million.

In an alternative embodiment, there is provided a composition, method of producing the same, and articles made therefrom, in accordance with any of the preceding embodiments, except the at least one polyol and the at least one isocyanate are reacted at an isocyanate index of between 80 and 95, and wherein the viscoelastic polyurethane foam has an aromatic amine content of less than 3 parts per million.

In an alternative embodiment, there is provided a composition, method of producing the same, and articles made therefrom, in accordance with any of the preceding embodiments, except the at least one polyol and the at least one isocyanate are reacted at an isocyanate index of between 80 and 95, and wherein the viscoelastic polyurethane foam has an aromatic amine content of less than 1 parts per million.

In an alternative embodiment, there is provided a composition, method of producing the same, and articles made therefrom, in accordance with any of the preceding embodiments, except the viscoelastic polyurethane foam comprises a 50% compression set of less than 10 and a 75% compression set of less than 10, and wherein the at least one polyol and the at least one isocyanate are reacted at an isocyanate index of less than 85.

In an alternative embodiment, there is provided a composition, method of producing the same, and articles made therefrom, in accordance with any of the preceding embodiments, except the viscoelastic polyurethane foam comprises a 50% compression set of less than 7 and a 75% compression set of less than 7, and wherein the at least one polyol and the at least one isocyanate are reacted at an isocyanate index of less than 85.

In an alternative embodiment, there is provided a composition, method of producing the same, and articles made therefrom, in accordance with any of the preceding embodiments, except the viscoelastic polyurethane foam comprises a 50% compression set of less than 5 and a 75% compression set of less than 5, and wherein the at least one polyol and the at least one isocyanate are reacted at an isocyanate index of less than 85.

In an alternative embodiment, there is provided a composition, method of producing the same, and articles made therefrom, in accordance with any of the preceding embodiments, except the viscoelastic polyurethane foam has a total VOC emission of less than 1000 µg/m³.

In an alternative embodiment, there is provided a composition, method of producing the same, and articles made therefrom, in accordance with any of the preceding embodiments, except the viscoelastic polyurethane foam has a total VOC emission of less than 500 µg/m³.

In an alternative embodiment, there is provided a composition, method of producing the same, and articles made therefrom, in accordance with any of the preceding embodiments, except the viscoelastic polyurethane foam has a total VOC emission of less than 300 µg/m³.

In an alternative embodiment, there is provided a composition, method of producing the same, and articles made therefrom, in accordance with any of the preceding embodiments, except the at least one isocyanate includes at least one of TDI isomers and MDI isomers.

In an alternative embodiment, there is provided a composition, method of producing the same, and articles made therefrom, in accordance with any of the preceding embodiments, except the at least one polyol comprises a polyol composition having a total hydroxyl number of all the isocyanate reactive species of the polyol composition, excluding water, of between 100 mg KOH/g and 300 mg KOH/g.

In an alternative embodiment, there is provided a composition, method of producing the same, and articles made therefrom, in accordance with any of the preceding embodiments, except the reaction mixture further comprises at least one tin catalyst.

In an alternative embodiment, there is provided a composition, method of producing the same, and articles made therefrom, in accordance with any of the preceding embodiments, except the viscoelastic foam comprises a bismuth content of between 1 parts per million and 750 parts per million,

In an alternative embodiment, there is provided a composition, method of producing the same, and articles made therefrom, in accordance with any of the preceding embodiments, except the viscoelastic foam comprises a bismuth content of between 6 parts per million and 450 parts per million.

In an alternative embodiment, there is provided a composition, method of producing the same, and articles made therefrom, in accordance with any of the preceding embodiments, except the viscoelastic foam comprises a bismuth content of between 12 parts per million and 400 parts per million.

In an alternative embodiment, there is provided a composition, method of producing the same, and articles made therefrom, in accordance with any of the preceding embodiments, except the article is a cushioning device

In an alternative embodiment, there is provided a composition, method of producing the same, and articles made therefrom, in accordance with any of the preceding embodiments, except the article is one of a pillow and mattress.

### Detailed Description

Embodiments of the present invention provide for a method of producing viscoelastic foams having excellent physical properties such as compression set while at the same time having low amounts of VOC and aromatic amines in the foams. The foams are produced by the reaction of at least one polyol composition with at least one isocyanate in the presence of at least one bismuth based catalyst. It has surprisingly been found that such foams produced using the at least one bismuth based catalyst exhibit reduced amounts of VOC and have an order of magnitude less aromatic amines than comparable foams made using other catalysts. The polyol composition includes at least one polyol or a mix of polyols. The polyol composition may also include other isocyanate reactive species, such as chain extenders and crosslinkers.

As the polyol composition is believed to primarily determine the T_{g} of the foam, and therefore the foam's viscoelastic behavior, the polyol composition is in most cases selected to provide the foam with a T_{g} in the range between -20 and 40°C, especially between -10 and 25°C. The polyol composition may be selected so that the total hydroxyl number of all the isocyanate reactive species of the polyol composition (except water) is between 100 mg KOH/g and 300 mg KOH/g, All individual values and subranges between 100 mg KOH/g and 300 mg KOH/g are included herein and disclosed herein; for example, the total hydroxyl number may be from a lower limit of 100, 105, 110, 115, 120, 125, 130, 140, or 150 to an upper limit of 200, 225, 250, 275, or 300. For example, the total hydroxyl number may in the range 100 to 300; or in the alternative, the total hydroxyl number may in the range 115 to 250; or in the alternative, the total hydroxyl number may in the range 125 to 225.

The at least one polyol may include those polyols having a functionality of from 2.5 to 4 hydroxyl groups per molecule and a molecular weight between 300 and 1500. In one embodiment, the at least one polyol may have a molecular weight between 400 and 1300, and in another, between 400 and 1100. Polyol molecular weights herein are all number average molecular weights.

The at least one polyol may be a polyether or polyester type. Hydroxy-functional acrylate polymers and copolymers are suitable. The at least one polyol may be a polymer of propylene oxide or ethylene oxide, or a copolymer (random or block) of propylene oxide and ethylene oxide. The polyol may have primary or secondary hydroxyl groups, but preferably has mainly secondary hydroxyl groups.

In addition to the at least one polyol described above, the polyol composition may also include monoalcohols or polyols that have a hydroxyl equivalent weight of at least 150. The monoalcohol(s) or polyol(s) may be used to perform various functions such as cell-opening, providing additional higher or lower temperature glass transitions to the polyurethane, modifying the reaction profile of the system and modifying polymer physical properties, or to perform other functions. Generally, the additional monoalcohol(s) or polyol(s) may have a molecular weight of from 200 to 13000, or more, and a functionality of from 1 to 8 or more hydroxyl groups per molecule. A monoalcohol or polyol may have, for example, a molecular weight of 1500 to 9000, especially from 2400 to 7500, and a functionality of from 1 to 8, especially from 1 to 4, hydroxyl groups per molecule. Another suitable monoalcohol or polyol has a functionality of from 1 to 2 hydroxyl groups per molecule and molecular weight from 600 to 1500.

The monoalcohol or polyol may be a polymer of one or more alkylene oxides such as ethylene oxide, propylene oxide and 1,2-butylene oxide, or mixtures of such alkylene oxides. Preferred polyethers are polypropylene oxides or polymers of a mixture of propylene oxide and ethylene oxide. The monoalcohol or polyol may also be a polyester. These polyesters include reaction products of polyols, preferably diols, with polycarboxylic acids or their anhydrides, preferably dicarboxylic acids or dicarboxylic acid anhydrides. The polycarboxylic acids or anhydrides may be aliphatic, cycloaliphatic, aromatic and/or heterocyclic and may be substituted, such as with halogen atoms. The polycarboxylic acids may be unsaturated. Examples of these polycarboxylic acids include succinic acid, adipic acid, terephthalic acid, isophthalic acid, trimellitic anhydride, phthalic anhydride, maleic acid, maleic acid anhydride and fumaric acid. The polyols used in making the polyester polyols may have an equivalent weight of 150 or less and include ethylene glycol, 1,2- and 1,3-propylene glycol, 1,4- and 2,3-butane diol, 1,6-hexane diol, 1,8-octane diol, neopentyl glycol, cyclohexane dimethanol, 2-methyl-1,3-propane diol, glycerine, trimethylol propane, 1,2,6-hexane triol, 1,2,4-butane triol, trimethylolethane, pentaerythritol, quinitol, mannitol, sorbitol, methyl glycoside, diethylene glycol, triethylene glycol, tetraethylene glycol, dipropylene glycol, dibutylene glycol.

Hydroxyl-functional polybutadiene polymers are also useful monoalcohols and polyols.

Additional monoalcohols and polyols of particular interest include:
1) poly(propylene oxide) homopolymers or random copolymers of propylene oxide and up to 20% by weight ethylene oxide, having a functionality of from 2 to 4 and an equivalent weight of 800 to 2200;
2) homopolymers of ethylene oxide or copolymers (random or block) of ethylene oxide and up to 50% by weight a C₃ or higher alkylene oxide, having a functionality of from 3 to 8, especially from 5 to 8, and an equivalent weight of from 1000 to 3000;
3) a homopolymer of ethylene oxide or propylene oxide, or random-copolymer of ethylene oxide and propylene oxide, having a functionality of about 1 and a molecular weight of 200 to 3000, especially from 1000-3000, including those monoalcohols of the type described in WO 01/57104;
4) a polymer polyol containing a monoalcohol or polyol having an equivalent weight of 500 or greater and a disperse polymer phase. The disperse polymer phase may be particles of an ethylenically unsaturated monomer (of which styrene, acrylonitrile and styrene-acrylonitrile copolymers are of particular interest), polyurea particles, or polyurethane particles. The disperse phase may constitute from 5 to 60% by weight of the polymer polyol;
5) a polymer polyol having autocatalytic activity and which can replace a portion or all of the amine and/or organometalic catalyst generally used in the production of polyurethane foams. Autocatalytic polyols are those made from an initiator containing a tertiary amine, polyols containing a tertiary amine group in the polyol chain or a polyol partially capped with a tertiary amine group. The autocatalytic polyol may be added to replace between 10 wt. % and 50 wt. % of amine catalyst while maintaining the same reaction profile. Alternatively, such autocatalytic polyols may be added to enhance the demold time. Such autocatalytic polyols are disclosed in EP 539,819, in U.S. Patents 5,672,636; 3,428,708; 5,482,979; 4,934,579 and 5,476,969 and in WO 01/ 58,976. Examples of such autocatalytic polyols include VORANOL VORACTIV polyols available from The Dow Chemical Company, such as VORANOL VORACTIV VV 7000.
6) mixture of any two or more of the foregoing.

The polyol composition may also include at least one natural oil based polyol. The natural oil based polyols are polyols based on or derived from renewable feedstock resources such as natural and/or genetically modified (GMO) plant vegetable seed oils and/or animal source fats. Such oils and/or fats are generally comprised of triglycerides, that is, fatty acids linked together with glycerol. Such vegetable oils may have at least 70 percent unsaturated fatty acids in the triglyceride. The natural product may contain at least 85 percent by weight unsaturated fatty acids. Examples of vegetable oils include those from castor, soybean, olive, peanut, rapeseed, corn, sesame, cotton, canola, safflower, linseed, palm, grapeseed, black caraway, pumpkin kernel, borage seed, wood germ, apricot kernel, pistachio, almond, macadamia nut, avocado, sea buckthorn, hemp, hazelnut, evening primrose, wild rose, thistle, walnut, sunflower, jatropha seed oils, or a combination thereof. Additionally, oils obtained from organisms such as algae may also be used. Examples of animal products include lard, beef tallow, fish oils and mixtures thereof. A combination of vegetable and animal based oils/fats may also be used.

For use in the production of polyurethane foams, the natural material may be modified to give the material isocyanate reactive groups or to increase the number of isocyanate reactive groups on the material. Preferably such reactive groups are a hydroxyl group. Several chemistries can be used to prepare the natural oil based polyols. Such modifications of a renewable resource include, for example, epoxidation, hydroxylation, ozonolysis, esterification, hydroformylation, or alkoxylation. Such modifications are commonly known in the art and are described, for example, in U.S. Patent Nos. 4,534,907, 4,640,801, 6,107,433, 6,121,398, 6,897,283, 6,891,053, 6,962,636, 6,979,477, and PCT publication Nos. WO 2004/020497, WO 2004/096744, and WO 2004/096882.

After the production of such polyols by modification of the natural oils, the modified products may be further alkoxylated. The use of ethylene oxide (EO) or mixtures of EO with other oxides, introduce hydrophilic moieties into the polyol. In one embodiment, the modified product undergoes alkoxylation with sufficient EO to produce a natural oil based polyol with between 10 weight % and 60 weight % percent EO; preferably between 20 weight % and 40 weight % EO.

In another embodiment, the natural oil based polyols are obtained by a multi-step process wherein the animal or vegetable oils/fats is subjected to transesterification and the constituent fatty acids recovered. This step is followed by hydroformylating carbon-carbon double bonds in the constituent fatty acids to form hydroxymethyl groups, and then forming a polyester or polyether/polyester by reaction of the hydroxymethylated fatty acid with an appropriate initiator compound. Such a multi-step process is commonly known in the art, and is described, for example, in PCT publication Nos. WO 2004/096882 and 2004/096883. The multi-step process results in the production of a polyol with both hydrophobic and hydrophilic moieties, which results in enhanced miscibility with both water and conventional petroleum-based polyols.

The initiator for use in the multi-step process for the production of the natural oil based polyols may be any initiator used in the production of conventional petroleum-based polyols. Preferably the initiator is selected from the group consisting of neopentylglycol; 1,2-propylene glycol; trimethylolpropane; pentaerythritol; sorbitol; sucrose; glycerol; diethanolamine; alkanediols such as 1,6-hexanediol, 1,4-butanediol; 1,4-cyclohexane diol; 2,5-hexanediol; ethylene glycol; diethylene glycol, triethylene glycol; bis-3-aminopropyl methylamine; ethylene diamine; diethylene triamine; 9(1)-hydroxymethyloctadecanol, 1,4-bishydroxymethylcyclohexane; 8,8-bis(hydroxymethyl)tricyclo[5,2,1,0^{2,6}]decene; Dimerol alcohol (36 carbon diol available from Henkel Corporation); hydrogenated bisphenol; 9,9(10,10)-bishydroxymethyloctadecanol; 1,2,6-hexanetriol and combination thereof. More preferably the initiator is selected from the group consisting of glycerol; ethylene glycol; 1,2-propylene glycol; trimethylolpropane; ethylene diamine; pentaerythritol; diethylene triamine; sorbitol; sucrose; or any of the aforementioned where at least one of the alcohol or amine groups present therein has been reacted with ethylene oxide, propylene oxide or mixture thereof; and combination thereof. More preferably, the initiator is glycerol, trimethylopropane, pentaerythritol, sucrose, sorbitol, and/or mixture thereof.

In one embodiment, the initiators are alkoxlyated with ethylene oxide or a mixture of ethylene and at least one other alkylene oxide to give an alkoxylated initiator with a molecular weight between 200 and 6000, preferably between 500 and 3000.

The functionality of the at least one natural oil based polyol, is above 1.5 and generally not higher than 6. In one embodiment, the functionality is below 4. The hydroxyl number of the at least one natural oil based polyol is below 300 mg KOH/g, preferably between 20 and 300, more preferably between 40 and 200. In one embodiment, the hydroxyl number is below 100. In one embodiment, the hydroxyl number is between 20 and 40.

Combination of two types or more of natural oil based polyols may also be used, either to maximize the level of seed oil in the foam formulation, or to optimize foam processing and/or specific foam characteristics, such as resistance to humid aging.

The polyol composition is reacted with at least one isocyanate to form a polyurethane foam. The isocyanate may be an organic isocyanate having an average of 1.8 or more isocyanate groups per molecule. The isocyanate functionality is preferably from 1.9 to 4, and more preferably from 1.9 to 3.5 and especially from 1.9 to 2.5. Suitable isocyanates include aromatic, aliphatic and cycloaliphatic isocyanates. Aromatic isocyanates are generally preferred based on cost, availability and properties imparted to the product polyurethane. Exemplary isocyanates include, for example, m-phenylene diisocyanate, 2,4- and/or 2,6-toluene diisocyanate (TDI), the various isomers of diphenylmethanediisocyanate (MDI), hexamethylene-1,6-diisocyanate, tetramethylene-1,4-diisocyanate, cyclohexane-1,4-diisocyanate, hexahydrotoluene diisocyanate, hydrogenated MDI (H₁₂ MDI), naphthylene-1,5-diisocyanate, methoxyphenyl-2,4-diisocyanate, 4,4'-biphenylene diisocyanate, 3,3'-dimethoxy-4,4'-biphenyl diisocyanate, 3,3'-dimethyldiphenylmethane-4,4'-diisocyanate, 4,4',4"-triphenylmethane triisocyanate, polymethylene polyphenylisocyanates, hydrogenated polymethylene polyphenylisocyanates, toluene-2,4,6-triisocyanate, and 4,4'-dimethyl diphenylmethane-2,2',5,5'-tetraisocyanate. Preferred isocyanates include MDI and derivatives of MIDI such as biuret-modified "liquid" MDI products and polymeric MDI, as well as mixtures of the 2,4- and 2,6- isomers of TDI. In one embodiment, the isocyanate is a mixture of 2,4-and 2,6-toluene diisocyanate containing at least 80% by weight of the 2,4-isomer.

The at least one isocyanate is reacted at an isocyanate index of between 70 and 110, preferably between 75 and 100, more preferably between 80 and 95. The isocyanate index is the ratio of isocyanate-groups over isocyanate-reactive hydrogen atoms present in a formulation, given as a percentage. Thus, the isocyanate index expresses the percentage of isocyanate actually used in a formulation with respect to the amount of isocyanate theoretically required for reacting with the amount of isocyanate-reactive hydrogen used in a formulation.

One or more crosslinkers are optionally present in the foam formulation, in addition to the polyols described above. If used, amounts of crosslinkers used are preferably at least 0.1, more preferably at least 0.25, and preferably at most 1, more preferably at most 0.5 part by weight, per 100 parts by weight of total polyols.

"Crosslinkers" may be materials having three or more isocyanate-reactive groups per molecule and preferably an equivalent weight per isocyanate-reactive group of less than 400. Crosslinkers preferably have at least 3 and preferably at most 8, more preferably about 4 hydroxyl, primary amine or secondary amine groups per molecule and have an equivalent weight of preferably at least 30, more preferably at least 50 and, independently preferably at most 200, more preferably at most 125. Examples of suitable crosslinkers include diethanol amine, monoethanol amine, triethanol amine, mono- di- or tri(isopropanol) amine, glycerine, trimethylol propane, pentaerythritol, sorbitol.

It is also possible to use one or more chain extenders in the foam formulation. A chain extender may be a material having two isocyanate-reactive groups per molecule and an equivalent weight per isocyanate-reactive group of preferably less than about 400, preferably at least about 31 and more preferably at most about 125. The isocyanate reactive groups are preferably hydroxyl, primary aliphatic or aromatic amine or secondary aliphatic or aromatic amine groups. Representative chain extenders include amines ethylene glycol, diethylene glycol, 1,2-propylene glycol, dipropylene glycol, tripropylene glycol, ethylene diamine, phenylene diamine, bis(3-chloro-4-aminophenyl)methane and 2,4-diamino-3,5-diethyl toluene. If used, chain extenders are typically present in an amount of preferably at least 1, more preferably at least about 3 and, independently preferably at most 50, more preferably at most 25 parts by weight per 100 parts by weight high equivalent weight polyol.

The use of such crosslinkers and chain extenders is known in the art as disclosed in U.S. Patent 4,863,979 and EP Publication 0 549 120.

To produce a polyurethane foam, a blowing agent may be used. In the production of flexible polyurethane foams, water may be preferred as a blowing agent. The amount of water is preferably at least 0.5, more preferably at least 0.8, and independently preferably at most 6, more preferably at most 4 parts by weight based on 100 parts by weight of the total polyol. Other blowing agents and their uses are well within the skill in the art. For instance, carboxylic acids or salts are optionally used as reactive blowing agents. Other blowing agents include liquid or gaseous carbon dioxide, methylene chloride, acetone, pentane, isopentane, methylal or dimethoxymethane, dimethylcarbonate, or a combination thereof. Use of artificially reduced or increased atmospheric pressure, as described in US 5,194,453, is also contemplated in the practice of the present invention. A foam is optionally blown with any one or any combination of such agents or means.

In addition to the foregoing components, it is may be desirable to employ certain other ingredients in preparing polyurethane polymers. Among these additional ingredients are emulsifiers, silicone surfactants, preservatives, flame retardants, colorants, antioxidants, antimicrobial agents, reinforcing agents, fillers, including recycled polyurethane foam in form of powder, or a combination of these with or without other additives.

One or more catalysts for the reaction of the polyol composition and, optionally, water with the isocyanate are used. In the various embodiments of the invention, at least one catalyst is a bismuth based catalyst. Bismuth based catalysts include, for instance, bismuth carboxylates such as acetate, oleate, octoate or neodecanoate, for example, bismuth nitrate, bismuth halides such as bromide, chloride or iodide, for example, bismuth sulfide, basic bismuth carboxylates such as bismuth neodecanoate, bismuth subgallate or bismuth subsalicylate, for example, and combinations thereof. Each bismuth based catalyst is preferably an organobismuth catalyst. Such organobismuth catalysts include, for instance, carboxylates and sulfonates, which are preferred among the organobismuth catalysts. Examples of sulfonates include aromatic sulfonates such as p-toluenesulfonate and aliphatic sulfonates such as methanesulfonate and trifluoromethanesulfonate. The bismuth based catalyst more preferably includes at least one bismuth carboxylate, such as 2-ethylhexanoate, stearate, tris(2-ethyl-hexaoctoate) or octoate, decanoate, preferably the carboxylate of carboxylic acids having preferably at least 2, more preferably at least 5, most preferably at least 8 carbon atoms, and advantageously at most 20, preferably at most 17, more preferably at most 15, most preferably at most 12 carbon atoms, and of such carboxylic acids, preferably aliphatic acids. In an embodiment of the invention, the bismuth based catyst is bismuth neodecanoate. In one embodiment, the bismuth based catalyst is a low acid (less than 34 percent free acid) organometallic catalyst, especially bismuth neodecanoate, as described in US 6,825,238.

The level of bismuth based catalyst or combination thereof employed for forming the polyurethane is between 0.005 parts per hundred parts of polyol by weight (PPHP) and 2 PPHP. All individual values and subranges between 0.005 parts PPHP and 2 PPHP are included herein and disclosed herein; for example, the level of bismuth based catalyst be from a lower limit of 0.005, 0.01, 0.015, 0.02, 0.025, 0.03, or 0.03 PPHP, an upper limit of 0.3, 0.4, 0.5, 0.6, 0.7, 0.8, 0.9, 1.0, 1.1, 1.2, 1.3, 1.4, 1.5, or 2.0 PPHP. For example, the level of bismuth based catalyst may in the range 0.005 to 2 PPHP; or in the alternative, the level of bismuth based catalyst may in the range 0.01 to 1.5 PPHP; in the alternative, the level of bismuth based catalyst may in the range 0.02 to 1.0 PPHP. That is, when the bismuth based catalyst is used to catalyze, for instance formation of a prepolymer, the total weight of polyols as a basis for determining the amount of catalyst to use is the weight of all polyols going to make up the prepolymer. Similarly, when the reaction in question includes, for instance, a hydroxy functional prepolymer and other polyols to react with isocyanate, the total prepolymer weight includes that of the hydroxyl functional prepolymer and other polyols entering into reaction to form a polyurethane. The use of bismuth based catalyst in any stage of polyurethane formation, that is, formation of at least one prepolymer, formation of a final polyurethane or a combination thereof is within the practice of the invention. In one embodiment, the bismuth based catalyst is used at least in the formation of the final polyurethane, whether or not one or more prepolymers is involved in an earlier or intermediate stage and whether or not at least one bismuth based catalyst is involved in any earlier or intermediate stage that optionally occurred.

In addition to the bismuth based catalyst, any catalyst suitable to form urethanes catalyst is optionally used. Such catalysts include tertiary amine compounds, amines with isocyanate reactive groups and organometallic compounds. Exemplary tertiary amine compounds include triethylenediamine, N-methylmorpholine, N,N-dimethylcyclohexylamine, pentamethyldiethylenetriamine, tetramethylethylenediamine, bis (dimethylaminoethyl)ether, 1-methyl-4-dimethylaminoethyl-piperazine, 3-methoxy-N-dimethylpropylamine, N-ethylmorpholine, dimethylethanolamine, N-cocomorpholine, N,N-dimethyl-N',N'-dimethyl isopropylpropylenediamine, N,N-diethyl-3-diethylaminopropylamine, dimethylbenzylamine and combinations thereof. Exemplary organometallic catalysts include organomercury, organolead, organoferric, organotin, organolithium and combinations thereof. Among the various additional catalysts, nitrogen-containing compounds such as those listed are preferred. Some additional catalyst, preferably containing nitrogen, is often particularly useful when the bismuth based catalyst is other than a carboxylate.

When at least one nitrogen containing catalyst, preferably an amine catalyst, is used with at least one bismuth based catalyst the amount of nitrogen-containing catalyst or combination thereof is preferably at least 0.05, more preferably at least 0.08, most preferably at least 0.1; and optionally at preferably at most 5, more preferably at most 4, most preferably at most 2 PPHP based on weight of total polyols in the reaction being catalyzed.

Processing for producing polyurethane products are well known in the art. In general components of the polyurethane-forming reaction mixture may be mixed together in any convenient manner, for example by using any of the mixing equipment and process described in the prior art for the purpose such as described in "Polyurethane Handbook", by G. Oertel, Hanser publisher.

In general, the polyurethane foam is prepared by mixing the isocyanate and polyol composition in the presence of at least one blowing agent, at least one catalyst and other optional ingredients as desired, under conditions such that the isocyanate and polyol composition react to form a polyurethane and/or polyurea polymer while the blowing agent generates a gas that expands the reacting mixture. The foam is optionally formed by the so-called prepolymer method, as described in U.S. Pat. No. 4,390,645, for example, in which a stoichiometric excess of the isocyanate is first reacted with the high equivalent weight polyol(s) to form a prepolymer, which is in a second step reacted with a chain extender and/or water to form the desired foam. Frothing methods, as described in U.S. Patents 3,755,212; 3,849,156 and 3,821,130, for example, are also suitable. So-called one-shot methods, such as described in U.S. Patent 2,866,744, are preferred. In such one-shot methods, the isocyanate and all isocyanate-reactive components are simultaneously brought together and caused to react. Three widely used one-shot methods, which are among the methods suitable for use in this invention, include conventional slabstock foam processes, high resiliency slabstock foam processes, viscoelastic foam slabstock process and molded foam methods.

Slabstock foam is conveniently prepared by mixing the foam ingredients and dispensing them into a trough or other region where the reaction mixture reacts, rises freely against the atmosphere (sometimes under a film or other flexible covering) and cures. In common commercial scale slabstock foam production, the foam ingredients (or various mixtures thereof) are pumped independently to a mixing head where they are mixed and dispensed onto a conveyor that is lined with paper or plastic. Foaming and curing occurs on the conveyor to form a foam bun. The resulting foams have densities below 100 kg/m³. All individual values and subranges below 100 kg/m³ are included herein and disclosed herein; for example, the density may be from a lower limit of 30, 35,40, 45, 50, 55, 60, 65, 70, 75, or 80, to an upper limit of 40, 45, 50, 55, 60, 65, 70, 75, 80, 85, 90, or 95.

Molded foam can be made according to embodiments of the invention by transferring the reactants (polyol composition, isocyanate, blowing agent, and surfactant) to a closed mold where the foaming reaction takes place to produce a shaped foam. Either a so-called "cold-molding" process, in which the mold is not preheated significantly above ambient temperatures, or a "hot-molding" process, in which the mold is heated to drive the cure, are optionally used. Molded foams may have densities below 100 kg/m³. All individual values and subranges below 100 kg/m³ are included herein and disclosed herein; for example, the density may be from a lower limit of 30, 35,40, 45, 50, 55, 60, 65, 70, 75, or 80, to an upper limit of 40, 45, 50, 55, 60, 65, 70, 75, 80, 85, 90, or 95.

The applications for foams produced by embodiments of the present invention are those known in the art or within the skill in the art. For instance, viscoelastic foams find use in applications such as bedding, furniture, shoe innersoles, earplugs, automobile seats, sun visors, packaging applications, armrests, door panels, noise insulation parts, helmet liners, other cushioning and energy management applications, or dashboards.

Embodiments of the present invention include foams having a resilience of at most 25 percent as measured according to ASTM D3574-03. For example, the resilience can be from a lower limit of 1, 1.5, 2, 2.5, 3, 4.5, 5, 5.5, 6, 6.5, 7, 8.5, 9, 9,5 10, or 10.5, to an upper limit of 5, 6.5, 7, 7.5, 8, 9, 10, 11, 12, 13, 14, 15, 16, 17, 18, 19, 20, 21, 22, 23, 24 or 25.

The viscoelastic foams may, according to embodiments of the invention, have a total VOC emission below 1000 µg/m³, as measured by the EUROPUR test method. EUROPUR test method is performed as described in EuroPUR technical text titled "CertiPUR Label for Flexible Polyurethane Foams" published August 6, 2008 under the headline "1.4. Emission of volatile organic compounds." All individual values and subranges below 1000 µg/m³ are included herein and disclosed herein; for example, the toatal VOC emission may be from a lower limit of 1, 2, 3, 4, 5, 10, 50, 75, 100, 150, 200, 250, 300, 400, 500 or 600 µg/m³ to an upper limit of 200, 250, 300, 500, 750, or 1000 µg/m³. For example, the viscoelastic foams may have a VOC emission in the range 100 µg/m³ to 600 µg/m³; or in the alternative, the viscoelastic foams may have a VOC emission in the range 50 µg/m³ to 500 µg/m³; or in the alternative, the viscoelastic foams may have a VOC emission in the range 10 µg/m³ to 500 µg/m³; or in the alternative, the viscoelastic foams may have a VOC emission in the range 100 µg/m³ to 500 µg/m³; or in the alternative, the viscoelastic foams may have a VOC emission in the range 200 µg/m³ to 500 µg/m³; or in the alternative, the viscoelastic foams may have a VOC emission in the range 300 µg/m³ to 500 µg/m³; or in the alternative, the viscoelastic foams may have a VOC content in the range 500 µg/m³ to 400 µg/m³; or in the alternative, the viscoelastic foams may have a VOC content in the range 100 µg/m³ to 400 µg/m³; or in the alternative, the viscoelastic foams may have a VOC content in the range 200 µg/m³ to 400 µg/m³.

The viscoelastic foams may, according to embodiments of the invention, have total aromatic amine content below 10 parts per million (ppm), as measured by the EUROPUR test method for 2,4 Toluenediamine (2,4 TDA) and 4,4' Diaminodiphenylmethane (4,4' MDA). EUROPUR test method is performed as described in EuroPUR technical text titled "CertiPUR Label for Flexible Polyurethane Foams" published August 6, 2008, under the headline "1.3. TDA and/or MDA (resp. for TDI and/or MDI based foam)." All individual values and subranges below 10 ppm are included herein and disclosed herein; for example, the aromatic amine content may be from a lower limit of 0.2, 0.3, 0.4, 0.5, 0.6, 0.7, 0.8, 0.9, 1.0 1.2, 1.3, 1.4, 1.5, 2.0, 2.5, 3.0, 3.5, 4.0, 4.5, 5.0, 6.0, or 7.0 ppm to an upper limit of 0.5, 0.6, 0.7, 0.8, 0.9, 1.0 1.2, 1.3, 1.4, 1.5, 2.0, 2.5, 3.0, 3.5, 4.0, 4.5, 5.0, 6.0, 7.0, 8.0, 9.0, or 9.5 pmm. For example, the viscoelastic foams may have a total aromatic amine content in the range 0.2 to 5 pmm; or in the alternative, the viscoelastic foams may have a aromatic amine content in the range 0.5 to 5.0 ppm; or in the alternative, the viscoelastic foams may have a aromatic amine content in the range 0.8 to 5.0 ppm; or in the alternative, the viscoelastic foams may have a aromatic amine content in the range 1 to 5 ppm; or in the alternative, the viscoelastic foams may have a aromatic amine content in the range 0.2 to 3.5 ppm; or in the alternative, the viscoelastic foams may have a aromatic amine content in the range 0.5 to 3.5 ppm; or in the alternative, the viscoelastic foams may have a aromatic amine content in the range 0.8 to 3.5 ppm; or in the alternative, the viscoelastic foams may have a aromatic amine content in the range 1.0 to 3.5 ppm.

The viscoelastic foams may, according to embodiments of the invention, have a bismuth content of between 1 ppm and 750 ppm. The bismuth may be present in the form of the bismuth based catalyst, as a derivative product of the bismuth based catalyst, or as reacted bismuth based catalyst. All individual values and subranges between 1 ppm and 750 ppm are included herein and disclosed herein; for example, the bismuth content may be from a lower limit of 1, 2, 3, 4, 5, 6, 7, 8, 9, 10, 11, 12, 13, 14, 15, 20, or 25 ppm, to an upper limit of 100, 150, 200, 250, 300, 325, 350, 375, 400, 425, 450, 475, 500, 525, 550, 600, 625, 650, 675, 700, 725, or 750 pmm. For example, the viscoelastic foams may have bismuth content in the range 3 to 725 pmm; or in the alternative, the viscoelastic foams may have a bismuth content in the range 6 to 450 pmm; or in the alternative, the viscoelastic foams may have a bismuth content in the range 12 to 400 ppm.

### Examples

The following examples are provided to illustrate the embodiments of the invention, but are not intended to limit the scope thereof. All parts and percentages are by weight unless otherwise indicated.

The following materials were used:
- VORANOL* CP 3322: A 48 equivalent weight triol of 87 percent propylene oxide and 13 percent ethylene oxide available from The Dow Chemical Company.
- VORANOL* CP 1421: A 1700 equivalent weight triol of 25 percent propylene oxide and 75 percent ethylene oxide available from The Dow Chemical Company.
- VORALUX* HT760: A 240 equivalent weight propylene oxide tirol available from The Dow Chemical Company.
- NIAX A-1: A tertiary amine catalyst available from Momentive Performance Materials.
- NIAX L 620: A silicone surfactant available from Momentive Performance Materials.
- NIAX L 627: A silicone surfactant available from Momentive Performance Materials.
- DABCO 33LV:: A 33% solution of triethylenediamine in propylene glycol available from Air Products & Chemicals Inc.
- DABCO MB 20: A bismuth neodecanoate available from Air Products & Chemicals Inc.
- KOSMOS 29: A stannous octoate catalyst available from Evonik Industries.
- VORANATE* T-80:: A toluene diisocyanate (80% 2,4-toluene diisocyanate and 20% 2,6-toluene diisocyanate by weight) composition available from The Dow Chemical Company
*VORALUX, VORANOL and VORANATE are trademarks of The Dow Chemical Company.

Continuous slabstock foam is produced using a Polymech continuous slabstock machine equipped with separate streams for polyols, water, catalysts, surfactants, additives, and isocyanate conditioned at a temperature of 22 °C. The polyols are poured with a combined output of 20 kg/min on a conveyor moving at a conveyor speed of 3.4 to 3.5 m/minute. All the formulations for the examples and the comparative examples include the materials listed in Table 1:

**Table 1**

| Material | Parts |
|---|---|
| VORALUX* HT 760 | 73 |
| VORANOL* CP 3322 | 21 |
| VORANOL* CP 1421 | 6 |
| NIAX A-1 | 0.15 |
| DABCO 33LV | 0.3 |
| Niax L620 | 0.3 |
| Niax L627 | 1.0 |
| Water | 1.5 |

Additionally, the formulations include either a tin based catalyst (KOSMOS 29, Comparative Examples C1-C4) or a bismuth based catalyst (DABCO MB 20, Examples E1-E6) and isocyanate (VORANATE* T-80) as given in Table 2:

**Table 2**

| | Unit | Test Method | C1 | C2 | C3 | C4 | E1 | E2 | E3 | E4 | E5 | E6 |
|---|---|---|---|---|---|---|---|---|---|---|---|---|
| **Material** | | | | | | | | | | | | |
| KOSMOS 29 | Parts | | 0.04 | 0.02 | 0.12 | 0.08 | | | | | | |
| Dabco MB 20 | Parts | | | | | | 0.08 | 0.04 | 0.02 | 0.16 | 0.12 | 0.08 |
| VORANATE* T-80 | Index | | 90 | 90 | 80 | 80 | 90 | 90 | 90 | 80 | 80 | 80 |

| **Foam Property** | | | | | | | | | | | | |
|---|---|---|---|---|---|---|---|---|---|---|---|---|
| Density | kg/m³ | ISO 3386:1986 | 57.7 | 55.9 | 60.4 | 70.4 | 58.5 | 59.5 | 59.3 | 63 | 64.6 | 66.7 |
| CFD 25% | kPa | ISO 3386:1986 | 1.78 | 1.25 | 0.45 | 0.47 | 2.88 | 1.82 | 1.75 | 0.83 | 0.078 | 1.10 |
| CFD 40% | kPa | ISO 3386:1986 | 2.23 | 1.55 | 0.69 | 0.70 | 2.33 | 2.23 | 2.17 | 1.09 | 1.02 | 1.38 |
| CFD 50% | kPa | ISO 3386:1986 | 2.72 | 1.9 | 0.92 | 0.98 | 2.86 | 2.73 | 2.63 | 1.38 | 1.30 | 1.71 |
| CFD 65 % | kPa | ISO 3386:1986 | 4.45 | 3.15 | 1.76 | 2.09 | 4.74 | 4.53 | 4.38 | 2.49 | 2.37 | 2.95 |
| SAG | kPa | ISO 3386:1986 | 1.52 | 1.52 | 2.20 | 2.09 | 1.52 | 1.51 | 1.50 | 1.67 | 1.67 | 1.56 |
| Hysteresis | scfm | ISO 3386:1986 | 67.1 | 68 | 29.6 | 28.5 | 66 | 68.2 | 69.4 | 53.7 | 55.9 | 67.8 |
| Tear | N/m | ISO 8067:1989 | 207 | 190 | 93 | 111 | 226 | 219 | 215 | 128 | 120 | 137 |
| Resilience | % | ASTM D3574-05 | 3 | 3 | 1.2 | 2.5 | 2.6 | 3 | 3.0 | 3.9 | 3.8 | 4.9 |
| Airflow uncrushed | scfm | ASTM D3574-05 | 0.81 | 1.18 | 0.34 | 0.68 | 0.95 | 1.08 | 1.3 | 0.48 | 0.86 | 1.37 |
| CS 50% | % | ASTM 3574-05 | 0.9 | 1.0 | 11.4 | 13.2 | 0.9 | 1.1 | 1.0 | 4.0 | 4.1 | 1.7 |
| CS 75% | % | ASTM 3574-05 | 0.6 | 1.1 | 42.5 | 19 | 1.0 | 0.9 | 0.4 | 3.5 | 2.8 | 1.3 |
| 2,4-toluenediamine | mg/kg | EUROPUR** | 7.8 | | 27.0 | | 0.6 | | | | 2.0 | |
| 4,4'-diamino-phenylmethane | mg/kg | EUROPUR** | <0.2 | | <0.2 | | <0.2 | | | | <0.2 | |

| | | | | | | | | | | | | |
|---|---|---|---|---|---|---|---|---|---|---|---|---|
| ** EUROPUR test method is performed as described in EuroPUR technical text titled "CertiPUR Label for Flexible Polyurethane Foams" published August 6, 2008, under the headline "1.3. TDA and/or MDA (resp. for TDI and/or MDI based foam)." Samples are tested by extraction (using 1% aqueous acetic acid solution) followed by analysis with HPLC (High performance liquid chromatography). | | | | | | | | | | | | |

Table 2 also provides the results of various foam property measurements. It can be seen that the level of 2,4-toluenediamine is much lower in the foams based on the bismuth based catalyst at 90 index, and surprisingly lower at 80 index. The level of 2,4-toluenedimine is more than an order of magnitude less in the foams based on the bismuth based catalyst than in the foams based on the tin catalyst, and well below the CertiPUR standard limit of 5 ppm. It can also be seen that the 50 % and 70 % compression set results (CS 50% and CS 75%) for the foams based on the bismuth based catalyst and tin based catalysts are comparable at an isocyanate index of 90. However, at an isocyanate index of 80, the foams based on the bismuth based catalyst have surprisingly much lower compression sets both at a compression set of 50 % and a compression set of 75%

While the foregoing is directed to embodiments of the present invention, other and further embodiments of the invention may be devised without departing from the basic scope thereof, and the scope thereof is determined by the claims that follow.

## Claims

1. A viscoelastic polyurethane foam, comprising:
the reaction product of a reaction mixture including at least one polyol and at least one isocyanate, wherein the at least one polyol and the at least one isocyanate are reacted in the presence of at least one bismuth comprising catalyst, and wherein the viscoelastic polyurethane foam has a density of less than 100 kg/m³ and a resilience of less than 25%.

2. The viscoelastic polyurethane foam of claim 1, wherein the resilience is less than 15%.

3. The viscoelastic polyurethane foam of claim 1, wherein the resilience is less than 10%.

4. The viscoelastic polyurethane foam of any one of claims 1-3, further comprising an aromatic amine content of less than 10 parts per million.

5. The viscoelastic polyurethane foam of claim 1, wherein the at least one polyol and the at least one isocyanate are reacted at an isocyanate index of between 70 and 110, and wherein the viscoelastic polyurethane foam has an aromatic amine content of less than 5 parts per million.

6. The viscoelastic polyurethane foam of claim 4 or 5, wherein the at least one polyol and the at least one isocyanate are reacted at an isocyanate index of between 75 and 100, and wherein the aromatic amine content is less than 2 parts per million.

7. The viscoelastic polyurethane foam of any one of claims 1-6, wherein the at least one polyol and the at least one isocyanate are reacted at an isocyanate index of between 80 and 95.

8. The viscoelastic polyurethane foam of claim 1, further comprising a 50% compression set of less than 10 and a 75% compression set of less than 10, and wherein the at least one polyol and the at least one isocyanate are reacted at an isocyanate index of less than 85.

9. The viscoelastic polyurethane foam of claim 8, wherein the 50% compression set is less than 5 and the 75% compression set is less than 5.

10. The viscoelastic polyurethane foam of any one of claims 1-9, wherein the viscoelastic polyurethane foam has a total VOC emission of less than 1000 µg/m³.

11. The viscoelastic polyurethane foam of claim 1, wherein the viscoelastic polyurethane foam has a total VOC emission of less than 300 µg/m³.

12. The viscoelastic polyurethane foam of claim 1, wherein the at least one polyol comprises a polyol composition having a total hydroxyl number of all the isocyanate reactive species of the polyol composition, excluding water, of between 100 mg KOH/g and 300 mg KOH/g,.

13. A method for preparing a viscoelastic polyurethane foam, comprising: combining a reaction mixture including at least one polyol, at least one isocyanate, and at least one bismuth comprising catalyst to form a foam having a density of less than 100 kg/m³ and a resilience of less than 25%.

14. An article comprising the viscoelastic polyurethane foam of any one of claim 1-13.

15. The article of claim 14, wherein the article is a cushioning device.

16. A viscoelastic foam, comprising a bismuth content of between about 1 parts per million and 750 parts per million, wherein the viscoelastic foam has a density of less than 100 kg/m³ and a resilience of less than 25%.

17. The viscoelastic foam of claim 16, wherein the bismuth content is between 12 parts per million and 400 parts per million.

## Patentansprüche

1. Ein viskoelastischer Polyurethanschaum, beinhaltend:
das Reaktionsprodukt eines mindestens ein Polyol und mindestens ein Isocyanat umfassenden Reaktionsgemisches, wobei das mindestens eine Polyol und das mindestens eine Isocyanat in Gegenwart mindestens eines Bismut beinhaltenden Katalysators zur Reaktion gebracht werden, und wobei der viskoelastische Polyurethanschaum eine Dichte von weniger als 100 kg/m³ und eine Elastizität von weniger als 25 % aufweist.

2. Viskoelastischer Polyurethanschaum gemäß Anspruch 1, wobei die Elastizität weniger als 15% beträgt.

3. Viskoelastischer Polyurethanschaum gemäß Anspruch 1, wobei die Elastizität weniger als 10 % beträgt.

4. Viskoelastischer Polyurethanschaum gemäß einem der Ansprüche 1-3, weiterhin beinhaltend einen Gehalt an aromatischem Amin von weniger als 10 Teilen pro Million.

5. Viskoelastischer Polyurethanschaum gemäß Anspruch 1, wobei das mindestens eine Polyol und das mindestens eine Isocyanat bei einem Isocyanatindex von zwischen 70 und 110 zur Reaktion gebracht werden, und wobei der viskoelastische Polyurethanschaum einen Gehalt an aromatischem Amin von weniger als 5 Teilen pro Million aufweist.

6. Viskoelastischer Polyurethanschaum gemäß Anspruch 4 oder 5, wobei das mindestens eine Polyol und das mindestens eine Isocyanat bei einem Isocyanatindex von zwischen 75 und 100 zur Reaktion gebracht werden, und wobei der Gehalt an aromatischem Amin weniger als 2 Teile pro Million beträgt.

7. Viskoelastischer Polyurethanschaum gemäß einem der Ansprüche 1-6, wobei das mindestens eine Polyol und das mindestens eine Isocyanat bei einem Isocyanatindex von zwischen 80 und 95 zur Reaktion gebracht werden.

8. Viskoelastischer Polyurethanschaum gemäß Anspruch 1, weiterhin beinhaltend einen 50-%-Druckverformungsrest von weniger als 10 und einen 75-%-Druckverformungsrest von weniger als 10, und wobei das mindestens eine Polyol und das mindestens eine Isocyanat bei einem Isocyanatindex von weniger als 85 zur Reaktion gebracht werden.

9. Viskoelastischer Polyurethanschaum gemäß Anspruch 8, wobei der 50-%-Druckverformungsrest weniger als 5 beträgt und der 75-%-Druckverformungsrest weniger als 5 beträgt.

10. Viskoelastischer Polyurethanschaum gemäß einem der Ansprüche 1-9, wobei der viskoelastische Polyurethanschaum eine Gesamt-VOC-Emission von weniger als 1000 µg/m³ aufweist.

11. Viskoelastischer Polyurethanschaum gemäß Anspruch 1, wobei der viskoelastische Polyurethanschaum eine Gesamt-VOC-Emission von weniger als 300 µg/m³ aufweist.

12. Viskoelastischer Polyurethanschaum gemäß Anspruch 1, wobei das mindestens eine Polyol eine Polyolzusammensetzung mit einer Gesamt-Hydroxylzahl aller isocyanatreaktiven Spezies der Polyolzusammensetzung, mit Ausnahme von Wasser, von zwischen 100 mg KOH/g und 300 mg KOH/g beinhaltet.

13. Ein Verfahren zur Herstellung eines viskoelastischen Polyurethanschaums, beinhaltend: Kombinieren eines mindestens ein Polyol, mindestens ein Isocyanat und mindestens einen Bismut beinhaltenden Katalysator umfassenden Reaktionsgemisches um einen Schaum mit einer Dichte von weniger als 100 kg/m³ und einer Elastizität von weniger als 25 % zu bilden.

14. Ein Artikel, beinhaltend den viskoelastischen Polyurethanschaum gemäß einem der Ansprüche 1-13.

15. Artikel gemäß Anspruch 14, wobei der Artikel eine Polsterungsvorrichtung ist.

16. Ein viskoelastischer Schaum, beinhaltend einen Bismutgehalt von zwischen etwa 1 Teil pro Million und 750 Teilen pro Million, wobei der viskoelastische Schaum eine Dichte von weniger als 100 kg/m³ und eine Elastizität von weniger als 25 % aufweist.

17. Viskoelastischer Schaum gemäß Anspruch 16, wobei der Bismutgehalt zwischen 12 Teilen pro Million und 400 Teilen pro Million beträgt.

## Revendications

1. Une mousse de polyuréthane viscoélastique, comprenant :
le produit de la réaction d'un mélange réactionnel incluant au moins un polyol et au moins un isocyanate, où l'au moins un polyol et l'au moins un isocyanate sont mis à réagir en présence d'au moins un catalyseur comprenant du bismuth, et où la mousse de polyuréthane viscoélastique a une masse volumique inférieure à 100 kg/m³ et une résilience inférieure à 25 %.

2. La mousse de polyuréthane viscoélastique de la revendication 1, où la résilience est inférieure à 15 %.

3. La mousse de polyuréthane viscoélastique de la revendication 1, où la résilience est inférieure à 10 %.

4. La mousse de polyuréthane viscoélastique de l'une quelconque des revendications 1 à 3, comprenant en sus une teneur en amines aromatiques inférieure à 10 parties par million.

5. La mousse de polyuréthane viscoélastique de la revendication 1, où l'au moins un polyol et l'au moins un isocyanate sont mis à réagir à un indice isocyanate compris entre 70 et 110, et où la mousse de polyuréthane viscoélastique a une teneur en amines aromatiques inférieure à 5 parties par million.

6. La mousse de polyuréthane viscoélastique de la revendication 4 ou de la revendication 5, où l'au moins un polyol et l'au moins un isocyanate sont mis à réagir à un indice isocyanate compris entre 75 et 100, et où la teneur en amines aromatiques est inférieure à 2 parties par million.

7. La mousse de polyuréthane viscoélastique de l'une quelconque des revendications 1 à 6, où l'au moins un polyol et l'au moins un isocyanate sont mis à réagir à un indice isocyanate compris entre 80 et 95.

8. La mousse de polyuréthane viscoélastique de la revendication 1, comprenant en sus une déformation rémanente après compression à 50 % inférieure à 10 et une déformation rémanente après compression à 75 % inférieure à 10, et où l'au moins un polyol et l'au moins un isocyanate sont mis à réagir à un indice isocyanate inférieur à 85.

9. La mousse de polyuréthane viscoélastique de la revendication 8, où la déformation rémanente après compression à 50 % est inférieure à 5 et la déformation rémanente après compression à 75 % est inférieure à 5.

10. La mousse de polyuréthane viscoélastique de l'une quelconque des revendications 1 à 9, où la mousse de polyuréthane viscoélastique a une émission de COV totale inférieure à 1 000 µg/m³.

11. La mousse de polyuréthane viscoélastique de la revendication 1, où la mousse de polyuréthane viscoélastique a une émission de COV totale inférieure à 300 µg/m³.

12. La mousse de polyuréthane viscoélastique de la revendication 1, où l'au moins un polyol comprend une composition de polyol ayant un indice d'hydroxyle total de l'ensemble des espèces réactives à l'isocyanate de la composition de polyol, à l'exclusion de l'eau, compris entre 100 mg KOH/g et 300 mg KOH/g.

13. Une méthode pour préparer une mousse de polyuréthane viscoélastique, comprenant :
la combinaison d'un mélange réactionnel incluant au moins un polyol, au moins un isocyanate, et au moins un catalyseur comprenant du bismuth afin de former une mousse qui a une masse volumique inférieure à 100 kg/m³ et une résilience inférieure à 25%.

14. Un article comprenant la mousse de polyuréthane viscoélastique de l'une quelconque des revendications 1 à 13.

15. L'article de la revendication 14, où l'article est un dispositif de rembourrage.

16. Une mousse viscoélastique, comprenant une teneur en bismuth comprise entre environ 1 partie par million et 750 parties par million, où la mousse viscoélastique a une masse volumique inférieure à 100 kg/m³ et une résilience inférieure à 25 %.

17. La mousse viscoélastique de la revendication 16, où la teneur en bismuth est comprise entre 12 parties par million et 400 parties par million.
